# EUROPEAN PATENT APPLICATION

(11) **EP 4 354 618 A1**
(43) Date of publication of application: **17.04.2024**
(21) Application number: 21960441.0
(22) Date of filing: 24.11.2021
(51) Int. Cl.: H01M 50/242, H01M 50/207, H01M 10/058

(54) **BATTERY, ELECTRICAL DEVICE, AND METHOD AND DEVICE FOR FABRICATING BATTERY**

(30) Priority: 12.10.2021 CN 202111188271
(71) Applicant: Contemporary Amperex Technology Co., Limited, Ningde, Fujian 352100 (CN)
(72) Inventor: XU, Hu, Ningde, Fujian 352100 (CN)
(74) Representative: Rowlands, Stuart Michael
(86) International application number: PCT/CN2021/132862
(87) International publication number: WO 2023/060714

(57) **Abstract**

Embodiments of the present application provide a battery, an electrical device, and a method and device for fabricating a battery. The battery comprises: a box body; and at least one first battery cell and at least one second battery cell, which are contained in the box body, the first battery cells and the second battery cells being different-shaped polyhedral structures, wherein the first battery cells and the second battery cells each comprise two walls connected to one another, one wall thereamong is perpendicular to a first direction, and the other wall is inclined relative to the first direction, and the first direction is perpendicular to an upper cover or a bottom wall of the box body; and the relatively inclined wall is used for attaching to the wall of an adjacent battery cell, so as to form an interaction force in the first direction between the inclined wall and the adjacent wall. According to the battery, the electrical device, and the method and device for fabricating a battery provided in the present application, the strength of a battery may be enhanced, thereby improving the safety of the battery.

## Description

### CROSS-REFERENCE TO RELATED APPLICATIONS

This application claims priority to Chinese Patent Application No. 202111188271.0, filed on October 12, 2021 and entitled "BATTERY CELL, BATTERY, AND ELECTRIC APPARATUS", which is incorporated herein by reference in its entirety.

### TECHNICAL FIELD

This application relates to the field of battery technologies, and in particular, to a battery, an electric device, and a method and device for manufacturing battery.

### BACKGROUND

Energy conservation and emission reduction are crucial to sustainable development of the automobile industry. In this context, with their advantages in energy conservation and emission reduction, electric vehicles have become an important part of sustainable development of the automobile industry. For electric vehicles, battery technology is an important factor in connection with their development.

In the development of battery technology, in addition to battery performance improvement, safety is another non-negligible issue. If the safety of a battery cannot be guaranteed, the battery cannot be used. Therefore, how to enhance the safety performance of batteries is an urgent technical problem that needs to be solved in battery technology.

### SUMMARY

This application provides a battery, an electric device, and a method and device for manufacturing battery to increase the strength of batteries and thus enhance the safety of batteries.

According to a first aspect, a battery is provided, including a box; and at least one first battery cell and at least one second battery cell that are accommodated in the box, the first battery cell and the second battery cell being polyhedral structures of different shapes, where the first battery cell includes a first wall and a second wall that are interconnected, the first wall is perpendicular to a first direction, the first direction is perpendicular to an upper cover or a bottom wall of the box, the second wall is inclined with respect to the first direction, and the second wall is configured to be attached to a first attachment wall adjacent to the first battery cell so that interaction forces in the first direction are generated between the second wall and the first attachment wall; and the second battery cell includes a third wall and a fourth wall that are interconnected, the third wall is perpendicular to the first direction, the fourth wall is inclined with respect to the first direction, and the fourth wall is configured to attach to a second attachment wall adjacent to the second battery cell so that interaction forces in the first direction are generated between the fourth wall and the second attachment wall.

Therefore, during the use of the battery in this embodiment of this application, interaction forces in the direction of gravity may be generated due to vibration impact, that is, interaction forces in the first direction are generated. Alternatively, the battery cell may swell and deform during charge and discharge, and as a result, interaction forces in the first direction are generated. In this way, the first battery cell may experience part of the interaction force in the first direction through the second wall and the first attachment wall to reduce the impact of the interaction force on the first battery cell, for example, the deformation of the first battery cell, particularly, the deformation in the first direction. Similarly, the second battery cell may experience part of the interaction force in the first direction through the fourth wall and the second attachment wall to reduce the impact of the interaction force on the second battery cell, for example, the deformation of the second battery cell, particularly, the deformation in the first direction. In addition, reduction of the deformation in the battery cell can improve the stiffness and strength of the whole battery, avoiding the safety risk caused by vibration impact and the like during the use of the battery. In addition, multiple battery cells of different shapes are provided in the battery and the multiple battery cells cooperate with each other, increasing the utilization of the internal space of the box of the battery, thereby improving the energy density of the battery.

In some embodiments, the first battery cell and the second battery cell are hexahedral structures. The hexahedral structures are stable and also easy to process, assemble, and arrange, and therefore can improve the energy density and assembly efficiency of the battery.

In some embodiments, a cross section of the first battery cell on a first plane is a parallelogram or trapezoid, where the first plane is perpendicular to the first wall and the second wall; and a cross section of the second battery cell on the first plane is a parallelogram or trapezoid.

Considering that the box is usually a cuboid, the battery cell of a hexahedral structure is designed as a regular hexahedron, facilitating arrangement, thereby improving the assembly efficiency of the battery.

In some embodiments, the battery includes at least two battery cell groups arranged in the first direction, where the at least two battery cell groups include the first battery cell and the second battery cell, each of the at least two battery cell groups includes multiple battery cells arranged in a second direction, and the first direction is perpendicular to the second direction.

The battery is provided with multiple battery cells of different shapes, and to facilitate assembly, the multiple battery cells are usually arranged in the box of the battery in a specified pattern. For example, the battery cells may be arranged in an array so as to improve assembly efficiency.

In some embodiments, the first direction and the second direction are parallel to the first plane to make the hexahedron battery cells more regular and more convenient for arrangement.

In some embodiments, the battery cell group includes multiple first battery cells and/or multiple second battery cells arranged in the second direction.

For any one of the battery cell groups, the battery cell group may include identically or differently shaped battery cells so that the battery cell groups can be flexibly arranged into different shapes so as to maximize the energy density of the battery.

In some embodiments, a separation member perpendicular to the first direction is provided between the at least two battery cell groups to separate different battery cell groups.

In some embodiments, the separation member is at least one of the following structures: cross beam, thermal management component, and structural adhesive.

The separation member may include a cross beam, and the cross beam can support multiple battery cells to increase the strength of the box so as to improve the strength and stability of the battery.

Optionally, the separation member in the embodiments of this application may further include a thermal management component. In other words, the separation member may hold fluid to regulate the temperature of the multiple battery cells.

Optionally, the separation member in the embodiments of this application may further include a structural adhesive so that multiple battery cells in direct contact with the separation member can be fastened to the separation member. Especially when largest-area walls of the multiple battery cells are provided on the surface of the structural adhesive, this can greatly improve the stability of the battery cells, thereby improving the strength and stability of the battery.

In some embodiments, the wall with a largest area of the first battery cell is perpendicular to the first direction, and the wall with a largest area of the second battery cell is perpendicular to the first direction. The largest-area walls of the first battery cell and the second battery cell being set perpendicular to the first direction are more conducive to heat dissipation, thereby reducing the swelling force of the first battery cell and the second battery cell in the first direction and improving the stability and safety of the battery.

In some embodiments, each of the battery cell groups includes multiple battery cells in direct contact with side walls of the box.

The second wall of the first battery cell and the fourth wall of the second battery cell are inclined with respect to the first direction and thus can experience at least part of the interaction force in the first direction between the battery cells. Therefore, end plates perpendicular to the side walls of the box may not be provided at two ends of the multiple battery cells so that outermost battery cells of each battery cell group may be in direct contact with the side walls of the box, thereby saving the internal space of the box.

In some embodiments, the wall with a smallest area of the first battery cell is parallel to the first plane, and the wall with a smallest area of the second battery cell is parallel to the first plane.

The wall with a smallest area of the battery cell in the battery being set parallel to the first plane helps to save space and avoid excessive gaps between the battery cell and the box in the direction perpendicular to the first plane.

In some embodiments, a first electrode terminal is provided on a wall with a smallest area of the first battery cell, and a second electrode terminal is provided on a wall with a smallest area of the second battery cell. The wall with a smallest area of the battery cell will experience less swelling. Therefore, when the electrode terminal is provided on the wall with a smallest area, the performance of the electrode terminal is not affected by swelling and deformation of the battery cell.

In some embodiments, the first battery cell is provided with two first electrode terminals located on different walls, and the second battery cell is provided with two second electrode terminals located on different walls.

In some embodiments, the two first electrode terminals are provided on two opposite walls of the first battery cell, and the two second electrode terminals are provided on two opposite walls of the second battery cell, so that two adjacent battery cells can be electrically connected through the attachment of the electrode terminals without the need for a busbar, saving the installation space for busbar, thereby further improving the energy density of the battery.

In some embodiments, the second wall is inclined at an angle in a range of (0°, 45°] with respect to the first direction, and the fourth wall is inclined at an angle in a range of (0°, 45°] with respect to the first direction. If the foregoing inclined angles are set too large, it may increase the difficulty of designing the dimensions of electrode assemblies in the battery cells, may affect the utilization of the internal space of the battery cells, and may affect the arrangement manner of the battery cells when the battery cells are assembled into the battery, increasing the space between the battery cells and the box, reducing the space utilization of the battery, and thus reducing the energy density of the battery.

According to a second aspect, an electric device is provided, including the battery according to the first aspect, where the battery is configured to provide electric energy for the electric device.

In some embodiments, the electric device may be a vehicle, a ship, or a spacecraft.

According to a third aspect, a method for manufacturing battery is provided, including: providing a box; and providing at least one first battery cell and at least one second battery cell, where the first battery cell and the second battery cell are accommodated in the box, and the first battery cell and the second battery cell are polyhedral structures of different shapes, where the first battery cell includes a first wall and a second wall that are interconnected, the first wall is perpendicular to a first direction, the first direction is perpendicular to an upper cover or a bottom wall of the box, the second wall is inclined with respect to the first direction, and the second wall is configured to be attached to a first attachment wall adjacent to the first battery cell so that interaction forces in the first direction are generated between the second wall and the first attachment wall; and the second battery cell includes a third wall and a fourth wall that are interconnected, the third wall is perpendicular to the first direction, the fourth wall is inclined with respect to the first direction, and the fourth wall is configured to attach to a second attachment wall adjacent to the second battery cell so that interaction forces in the first direction are generated between the fourth wall and the second attachment wall.

According to a fourth aspect, a device for manufacturing battery is provided, including modules for performing the method according to the third aspect.

### BRIEF DESCRIPTION OF DRAWINGS

FIG. 1 is a schematic structural diagram of a vehicle according to an embodiment of this application;
FIG. 2 is a schematic structural exploded view of a battery according to an embodiment of this application;
FIG. 3 is a schematic diagram of a local cross section of a battery according to an embodiment of this application;
FIG. 4 is a schematic diagram of two adjacent battery cells according to an embodiment of this application;
FIG. 5 is a schematic diagram of another local cross section of a battery according to an embodiment of this application;
FIG. 6 is a schematic diagram of still another local cross section of a battery according to an embodiment of this application;
FIG. 7 is another schematic diagram of two adjacent battery cells according to an embodiment of this application;
FIG. 8 is a schematic diagram of several possible cross sections of a battery cell according to an embodiment of this application;
FIG. 9 is a schematic diagram of several other possible cross sections of a battery cell according to an embodiment of this application;
FIG. 10 is a schematic diagram of another cross section of a battery cell according to an embodiment of this application;
FIG. 11 is a schematic diagram of another cross section of a battery according to an embodiment of this application;
FIG. 12 is a schematic flowchart of a method for manufacturing battery according to an embodiment of this application; and
FIG. 13 is a schematic block diagram of a device for manufacturing battery according to an embodiment of this application.

The accompanying drawings are not drawn to scale.

### DESCRIPTION OF EMBODIMENTS

The following further describes implementations of this application in detail with reference to accompanying drawings and embodiments. The detailed description of the following embodiments and the accompanying drawings are used to exemplarily illustrate the principle of this application, but cannot be used to limit the scope of this application, that is, this application is not limited to the described embodiments.

In the descriptions of this application, it should be noted that, unless otherwise stated, "plurality" means two or more; and the orientations or positional relationships indicated by the terms "upper", "lower", "left", "right", "inside", "outside", and the like are merely intended to help the descriptions of this application and simplify the descriptions rather than to indicate or imply that the apparatuses or components must have specific orientations, or be constructed and manipulated with specific orientations, and therefore shall not be construed as limitations on this application. In addition, the terms "first", "second", and "third" are merely intended for a purpose of description, and shall not be understood as an indication or implication of relative importance. "Perpendicular" is not perpendicular in the strict sense but within an allowable range of error. "Parallel" is not parallel in the strict sense but within an allowable range of error.

The orientation terms appearing in the following description all are directions shown in the figures and do not limit the specific structure of this application. In the descriptions of this application, it should be further noted that unless otherwise specified and defined explicitly, the terms "mount", "connect", and "join" should be understood in their general senses. For example, the terms may be a fixed connection, a detachable connection, or an integrated connection, or may be a direct connection, or an indirect connection via an intermediate medium. Persons of ordinary skill in the art can understand specific meanings of these terms in this application based on specific situations.

In the embodiments of this application, the same reference signs denote the same components. For brevity, in different embodiments, detailed descriptions of the same components are not repeated. It should be understood that as shown in the accompanying drawings, sizes such as thickness, length, and width of various members and sizes such as thickness, length, and width of integrated devices in the embodiments of this application are merely for illustrative purposes and should not constitute any limitations on this application.

In this application, the battery cell may include a lithium-ion secondary battery, a lithium-ion primary battery, a lithium-sulfur battery, a sodium-lithium-ion battery, a sodium-ion battery, a magnesium-ion battery, or the like. This is not limited in the embodiments of this application. The battery cell may be cylindrical, flat, cuboid, or of other shapes. This is not limited in the embodiments of this application either. Battery cells are typically divided into three types by packaging method: cylindrical cell, prismatic cell, and pouch cell. This is not limited in the embodiments of this application either.

The battery mentioned in the embodiments of this application is a single physical module that includes one or more battery cells for providing a higher voltage and capacity. For example, the battery mentioned in this application may include a battery module, a battery pack, or the like. A battery typically includes a box configured to enclose one or more battery cells. The box can prevent liquids or other foreign matter from affecting charging or discharging of the battery cell.

The battery cell includes an electrode assembly and an electrolyte. The electrode assembly includes a positive electrode plate, a negative electrode plate, and a separator. Working of the battery cell mainly relies on migration of metal ions between the positive electrode plate and the negative electrode plate. The positive electrode plate includes a positive electrode current collector and a positive electrode active substance layer. The positive electrode active substance layer is applied on a surface of the positive electrode current collector. The part of positive electrode current collector uncoated with the positive electrode active substance layer protrudes out of the part of positive electrode current collector coated with the positive electrode active substance layer and serves as a positive tab. A lithium-ion battery is used as an example, for which, the positive electrode current collector may be made of aluminum and the positive electrode active substance may be lithium cobaltate, lithium iron phosphate, ternary lithium, lithium manganate, or the like. The negative electrode plate includes a negative electrode current collector and a negative electrode active substance layer. The negative electrode active substance layer is applied on a surface of the negative electrode current collector. The part of negative electrode current collector uncoated with the negative electrode active substance layer protrudes out of the part of negative electrode current collector coated with the negative electrode active substance layer and serves as a negative tab. The negative electrode current collector may be made of copper, and the negative electrode active substance may be carbon, silicon, or the like. To allow a large current to pass through without any fusing, multiple positive tabs are provided and stacked together, and multiple negative tabs are provided and stacked together. The separator may be made of polypropylene (polypropylene, PP), polyethylene (polyethylene, PE), or the like. In addition, the electrode assembly may be a winding structure or a laminated structure, but the embodiments of this application are not limited thereto.

For the development of battery technology, many design factors need to be considered, for example, performance parameters such as energy density, cycle life, discharge capacity, and charge and discharge rate, as well as safety of the battery.

Main safety hazards of batteries come from charge and discharge processes. For example, an electrode assembly in a battery cell generates heat and swells during charge and discharge, and this in turn causes the battery cell to heat up, swell, and deform. For example, if the electrode assembly in the battery cell is a cylinder, correspondingly, a housing of the battery cell is also designed as a cylinder. However, when cylindrical battery cells are assembled, because battery boxes are usually a cuboid, there are many gaps between the battery cells and between the battery cells and a box. In other words, space utilization of the battery is low, and the energy density thereof is low. In addition, poles of the cylindrical battery cell are usually arranged at two base surfaces of the cylinder. Out of consideration of limited space at the base surface and end cover strength at the base surface, a pressure relief mechanism of the battery cell is provided on a lateral surface of the cylinder. However, this lateral surface is arc-shaped and therefore does not facilitate the design of the pressure relief mechanism.

Alternatively, the electrode assembly in the battery cell may be an approximate cuboid, and correspondingly, an external housing of the battery cell is also designed as a cuboid. When multiple battery cells are assembled into a battery, largest-area faces of the multiple battery cells usually abut against each other. In addition, considering that the swelling and deformation of the largest-area walls of each battery cell are large during charge and discharge of the multiple battery cells, end plates abutting against the largest-area walls of the battery cells may be further arranged on two sides of a column of battery cells to constrain the multiple battery cells so as to prevent deformation of the multiple battery cells. However, the largest-area walls of the battery cells being arranged to abut against each other weaken the heat dissipation ability of the battery cells. Especially, when thermal runaway occurs on one of the battery cells, heat is conducted to an adjacent battery cell through the wall with the largest area, causing more battery cells to have thermal runaway and reducing the safety performance.

Alternatively, for cuboid battery cells, if the largest-area walls of the multiple battery cells do not abut against each other, for example, if smallest-area walls of the multiple battery cells abut against each other, heat dissipation of the battery cells improves, but electrode assemblies of the battery cells swell and deform during charge and discharge of the battery cells because the largest-area walls of the battery cells are not constrained by end plates. This may lead to interface deterioration and thus lithium precipitation, affecting the performance of batteries.

Therefore, an embodiment of this application provides a battery. At least one first battery cell and at least one second battery cell are provided in a box of the battery. The first battery cell and the second battery cell are polyhedral structures of different shapes. In addition, for interconnected first and second walls of the first battery cell and interconnected third and fourth walls of the second battery cell, both the first wall and the third wall are perpendicular to a first direction, where the first direction is perpendicular to an upper cover or a bottom wall of the box; and both the second wall and the fourth wall are inclined with respect to the first direction. In addition, the second wall is attached to a first attachment wall of a battery cell adjacent to the first battery cell so that interaction forces in the first direction are generated between the second wall and the first attachment wall. Similarly, the fourth wall is attached to a second attachment wall of a battery cell adjacent to the second battery cell so that interaction forces in the first direction are generated between the fourth wall and the second attachment wall.

In this way, the first battery cell may experience part of the interaction force in the first direction through the second wall and the first attachment wall to reduce the impact of the interaction force on the first battery cell, for example, the deformation of the first battery cell, particularly, the deformation in the first direction. Similarly, the second battery cell may experience part of the interaction force in the first direction through the fourth wall and the second attachment wall to reduce the impact of the interaction force on the second battery cell, for example, the deformation of the second battery cell, particularly, the deformation in the first direction. In addition, reduction of the deformation in the battery cell can improve the stiffness and strength of the whole battery, avoiding the safety risk caused by vibration impact and the like during the use of the battery. In addition, multiple battery cells of different shapes are provided in the battery and the multiple battery cells cooperate with each other, increasing the utilization of the internal space of the box of the battery, thereby improving the energy density of the battery.

The technical solution described in the embodiments of this application is applicable to a variety of electric devices using a battery.

The electric device may be a vehicle, a mobile phone, a portable device, a notebook computer, a ship, a spacecraft, an electric toy, an electric tool, or the like. The vehicle may be a fossil fuel vehicle, a natural gas vehicle, or a new energy vehicle. The new energy vehicle may be a battery electric vehicle, a hybrid electric vehicle, a range-extended electric vehicle, or the like. The spacecraft includes an airplane, a rocket, a space shuttle, a spaceship, and the like. The electric toy includes a fixed or mobile electric toy, for example, a game console, an electric toy car, an electric toy ship, an electric toy airplane, and the like. The electric tool includes an electric metal cutting tool, an electric grinding tool, an electric assembly tool, and an electric railway-specific tool, for example, an electric drill, an electric grinder, an electric wrench, an electric screwdriver, an electric hammer, an electric impact drill, a concrete vibrator, and an electric planer. The embodiments of this application impose no special limitation on the foregoing electric device.

For ease of description, the electric device being a vehicle is used as an example for the description of the following embodiments.

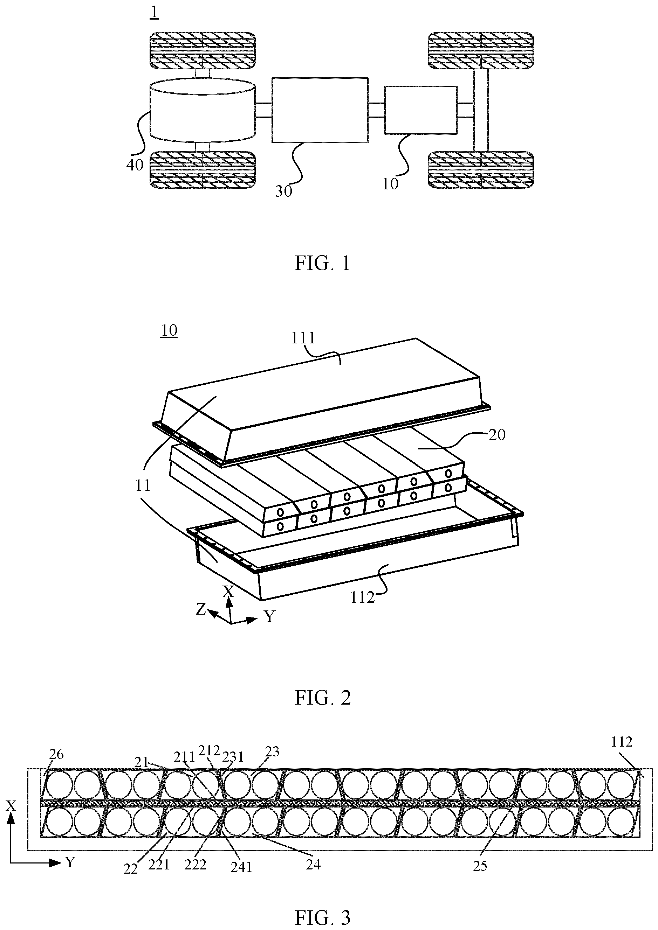

For example, FIG. 1 is a schematic structural diagram of a vehicle 1 according to an embodiment of this application. The vehicle 1 may be a fossil fuel vehicle, a natural-gas vehicle, or a new energy vehicle, where the new energy vehicle may be a battery electric vehicle, a hybrid electric vehicle, a range-extended vehicle, or the like. A motor 40, a controller 30, and a battery 10 may be provided inside the vehicle 1, where the controller 30 is configured to control the battery 10 to supply power to the motor 40. For example, the battery 10 may be provided at the bottom, front, or rear of the vehicle 1. The battery 10 may be configured to supply power to the vehicle 1. For example, the battery 10 may be used as an operational power source for the vehicle 1 which is configured for a circuit system of the vehicle 1, for example, to provide power for starting, navigating, and running the vehicle 1. In another embodiment of this application, the battery 10 can be used not only as the operational power source for the vehicle 1, but also as a driving power source for the vehicle 1, replacing or partially replacing fossil fuel or natural gas to provide driving traction for the vehicle 1.

To meet different power usage requirements, the battery may include multiple battery cells, and the multiple battery cells may be connected in series, parallel, or series-parallel, where being connected in series-parallel means a combination of series and parallel connections. The battery may also be called a battery pack. Optionally, multiple battery cells may be connected in series, parallel, or series-parallel to form a battery module first, and then multiple battery modules are connected in series, parallel, or series-parallel to form a battery. In a word, the multiple battery cells may be directly combined into a battery, or may first be combined into battery modules which are then combined into a battery.

For example, FIG. 2 is a schematic structural diagram of a battery 10 according to an embodiment of this application. The battery 10 may include multiple battery cells 20. The multiple battery cells 20 are arranged in an array. The battery 10 may further include a box 11. Inside of the box 11 is a hollow structure. The multiple battery cells 20 are accommodated in the box 11. FIG. 2 shows a possible implementation of the box 11 in the embodiments of this application. As shown in FIG. 2, the box 11 may include two portions which are referred to as a first portion 111 and a second portion 112 respectively, and the first portion 111 and the second portion 112 are snap-fitted. Shapes of the first portion 111 and the second portion 112 may be determined based on a shape of the combination of the battery cells 20. At least one of the first portion 111 and the second portion 112 is provided with an opening. For example, as shown in FIG. 2, the first portion 111 and the second portion 112 each may be a hollow cuboid and have only one face with an opening, where an opening of the first portion 111 and an opening of the second portion 112 are opposite each other, and the first portion 111 and the second portion 112 are snap-fitted to form a box 11 having an enclosed chamber.

For another example, unlike FIG. 2, it is possible that only one of the first portion 111 and the second portion 112 is a hollow cuboid with an opening, and the other may be a plate for covering the opening. For example, an example is used where the second portion 112 is a hollow cuboid and has only one face with an opening and the first portion 111 is a plate. Therefore, the first portion 111 covers the opening of the second portion 112 to form the box 11 with an enclosed chamber. The chamber may be configured for accommodating the multiple battery cells 20. The multiple battery cells 20 are connected in series, parallel, or series-parallel and then placed into the box 11 formed after the first portion 111 and the second portion 112 are snap-fitted.

Optionally, the battery 10 may also include other structures. Details are not described herein. For example, the battery 10 may also include a busbar that is used to implement electrical connection between the multiple battery cells 20, for example, in parallel, in series, or in hybrid connection. Specifically, the busbar may enable the electrical connection between the battery cells 20 by connecting the electrode terminals of the battery cells 20. Further, the busbar may be fixed to the electrode terminals of battery cells 20 by welding. Electrical energy of the multiple battery cells 20 may be further led out by a conductive mechanism that passes through the box 11.

Depending on different power needs, the battery cells 20 in the battery 10 may be provided in any quantity. The multiple battery cells 20 may be connected in series, in parallel, or in hybrid connection to achieve a greater capacity or power. Because each battery 10 may include a large number of battery cells 20, for ease of installation, the battery cells 20 may alternatively be provided by group, and each group of battery cells 20 form a battery module. The number of battery cells 20 included in the battery module is not limited, and may be set according to requirements. A battery may include multiple battery modules. These battery modules may be connected in series, parallel, or series-parallel.

FIG. 3 is a local schematic diagram of a battery 10 according to an embodiment of this application. As shown in FIG. 3, the battery 10 of this embodiment of this application may include a box 11, at least one first battery cell 21, and at least one second battery cell 22. Specifically, the at least one first battery cell 21 and the at least one second battery cell 22 are accommodated in the box 11. The first battery cell 21 and the second battery cell 22 are polyhedral structures of different shapes. The first battery cell 21 includes a first wall 211 and a second wall 212 that are interconnected to each other. The first wall 211 is perpendicular to a first direction. The first direction is perpendicular to an upper cover or a bottom wall of the box 11. The second wall 212 is inclined with respect to the first direction. The second wall 212 is configured to attach to a first attachment wall 231 adjacent to the first battery cell 21 so that interaction forces in the first direction are generated between the second wall 212 and the first attachment wall 231. The second battery cell 22 includes a third wall 221 and a fourth wall 222 that are interconnected to each other. The third wall 221 is perpendicular to the first direction. The fourth wall 222 is inclined with respect to the first direction. The fourth wall 222 is configured to attach to a second attachment wall 241 adjacent to the second battery cell 22 so that interaction forces in the first direction are generated between the fourth wall 222 and the second attachment wall 241.

It should be understood that the box 11 of the battery 10 in this embodiment of this application may be a polyhedral structure. When the battery 10 is installed in an electric device, an uppermost one of multiple faces of the box 11 in the direction of gravity is an upper cover of the box 11, and in contrast, a lowermost one of the multiple faces is a bottom wall of the box 11. In addition, the upper cover of the box 11 may be perpendicular to the direction of gravity or may be inclined with respect to the direction of gravity, and the bottom wall of the box 11 may also be perpendicular to the direction of gravity or may be inclined with respect to the direction of gravity. Generally, when the battery 10 is placed in an electric device, the upper cover or the bottom wall of the battery is in a position substantially parallel to the horizontal plane to facilitate stable fixation of the battery. The upper cover and bottom wall of the box 11 may or may not be parallel to each other. For example, in FIG. 2, for the cuboid box 11, a bottom wall of a second portion 112 opposite an opening of the second portion 112 may face downward to serve as a bottom wall for installing the battery 10, and accordingly, a bottom wall of a first portion 111 is an upper cover of the battery 10. Alternatively, the bottom wall of the first portion 111 may face downward to serve as a bottom wall for installing the battery 10, and accordingly, the bottom wall of the second portion 112 is an upper cover of the battery 10. The embodiments of this application are not limited thereto.

For ease of description, this application is described by using an example the bottom wall of the second portion 112 facing downward to serve as the bottom wall of the battery 10 and the bottom wall of the first portion 111 serving as the upper cover of the battery 10. In addition, as shown in FIG. 1, the bottom wall of the first portion 111 and the bottom wall of the second portion 112 being parallel to each other and perpendicular to the direction of gravity are used as an example herein.

In addition, the first direction in this embodiment of this application is perpendicular to the upper cover or the bottom wall of the box 11, and therefore the first direction may be parallel to the direction of gravity or may be inclined with respect to the direction of gravity. For ease of understanding, the first direction being parallel to the direction of gravity is used as an example for description. In addition, the first direction in this embodiment of this application may include a positive direction and a negative direction. The positive direction of the first direction is opposite to the direction of gravity, in other words, the positive direction of the first direction is the direction X as indicated by the arrow in FIG. 3. The negative direction of the first direction is the same as the direction of gravity, in other words, the negative direction of the first direction is opposite to the direction X as indicated by the arrow in FIG. 3.

The battery 10 in this embodiment of this application includes multiple battery cells 20 of different shapes, and all the battery cells 20 are polyhedral structures. The first battery cell 21 and the second battery cell 22 are any two differently shaped battery cells 20 of the multiple battery cells 20. For example, the first battery cell 21 and the second battery cell 22 may or may not be adjacent battery cells.

It should be understood that the first battery cell 21 and the second battery cell 22 having different shapes in this embodiment of this application may include at least one cross section of the first battery cell 21 and a corresponding cross section of the second battery cell 22 having different shapes, or the two cross sections being unable to overlap completely. For example, a cross section of the first battery cell 21 on a plane is a trapezoid and a corresponding cross section of the second battery cell 22 on the same plane is a parallelogram or may be a trapezoid which is different from the cross section trapezoid of the first battery cell 21 in dimension or interior corner angle. The embodiments of this application are not limited thereto.

In this embodiment of this application, the first battery cell 21 is a polyhedral structure. The first wall 211 and the second wall 212 are two intersecting walls of the first battery cell 21, the first wall 211 is perpendicular to the first direction, and the second wall 212 is inclined with respect to the first direction. In other words, the included angle between the first wall 211 and the second wall 212 is not a right angle, and therefore the first wall 211 and the second wall 212 are not perpendicular to each other. For a battery cell 23 adjacent to the first battery cell 21, the second wall 212 of the first battery cell 21 is attached to the first attachment wall 231 of an adjacent battery cell 23. Because the second wall 212 is inclined with respect to the first direction, the first attachment wall 231 is also inclined with respect to the first direction, and interaction forces in the first direction may be generated between the second wall 212 and the first attachment wall 231, in other words, the second wall 212 may experience at least part of the interaction force in the first direction from the first battery cell 21 or the battery cell to which the first attachment wall 231 belongs. Similarly, the first attachment wall 231 may also experience at least part of the interaction force in the first direction from the battery cell to which it belongs or the first battery cell 21.

Similarly, the second battery cell 22 is also a polyhedral structure. The third wall 221 and the fourth wall 222 are two intersecting walls of the second battery cell 22, the third wall 221 is perpendicular to the first direction, and the fourth wall 222 is inclined with respect to the first direction. In other words, the included angle between the third wall 221 and the fourth wall 222 is not a right angle, and therefore the third wall 221 and the fourth wall 222 are not perpendicular to each other. For the battery cell 24 adjacent to the second battery cell 22, the fourth wall 222 of the second battery cell 22 is attached to the second attachment wall 241 of an adjacent battery cell 24. Because the fourth wall 222 is inclined with respect to the first direction, the second attachment wall 241 is also inclined with respect to the first direction, and the interaction force in the first direction may be generated between the fourth wall 222 and the second attachment wall 241, in other words, the fourth wall 222 may experience at least part of the interaction force in the first direction from the second battery cell 22 or the battery cell to which the second attachment wall 241 belongs. Similarly, the second attachment wall 241 may also experience at least part of the interaction force in the first direction from the battery cell to which it belongs or the second battery cell 22.

It should be understood that the battery cell 23 adjacent to the first battery cell 21 and the first battery cell 21 are attached to each other through the second wall 212 and the first attachment wall 231, in other words, the second wall 212 and the first attachment wall 231 are provided in close fit and the second wall 212 is parallel to the first attachment wall 231. Similarly, the battery cell 24 adjacent to the second battery cell 22 and the second battery cell 22 are attached to each other through the fourth wall 222 and the second attachment wall 241, in other words, the fourth wall 222 and the second attachment wall 241 are provided in close fit and the fourth wall 222 is parallel to the second attachment wall 241.

Therefore, during the use of the first battery cell 21 and the second battery cell 22 in this embodiment of this application, interaction forces in the direction of gravity may be generated when the battery 10 is under vibration impact, that is, interaction forces in the first direction are generated. Alternatively, the battery cell 20 may swell and deform during charge and discharge, and as a result, interaction forces in the first direction are generated. The first battery cell 21 may experience part of the interaction force in the first direction through the second wall 212 and the first attachment wall 231 to reduce the impact of the interaction force on the first battery cell 21, for example, the deformation of the first battery cell 21, particularly, the deformation in the first direction. Similarly, the second battery cell 22 may experience part of the interaction force in the first direction through the fourth wall 222 and the second attachment wall 241 to reduce the impact of the interaction force on the second battery cell 22, for example, the deformation of the second battery cell 22, particularly, the deformation in the first direction. In addition, reduction of the deformation in the battery cell 20 can improve the stiffness and strength of the whole battery 10, avoiding the safety risk caused by vibration impact and the like during the use of the battery 10. In addition, the multiple battery cells 20 of different shapes are provided in the battery 10 and the multiple battery cells 20 cooperate with each other, increasing the utilization of the internal space of the box 11 of the battery 10, thereby improving the energy density of the battery 10.

In this embodiment of this application, for a wall of the battery cell 20 inclined with respect to the first direction, an inclined angle may usually be set depending on actual application. For example, the inclined angle may be set to a value in a range of (0°, 45°]. Furthermore, the inclined angle may be a value in a range of [5°, 10°]. Specifically, the second wall 212 is inclined at an angle in a range of (0°, 45°] in the first direction, for example, [5°, 10°]; and/or the fourth wall 222 is inclined at an angle in a range of (0°, 45°] in the first direction, for example, [5°, 10°]. In addition, the second wall 212 may or may not be inclined at a same angle with respect to the first direction as the fourth wall 222. If the foregoing inclined angles are set too large, it may increase the difficulty of designing the dimensions of electrode assemblies in the battery cells 20, may affect the utilization of the internal space of the battery cells 20, and may affect the arrangement manner of the battery cells 20 when the battery cells 20 are assembled into the battery, increasing the space between the battery cells 20 and the box 11, reducing the space utilization of the battery 10, and thus reducing the energy density of the battery 10.

It should be understood that the multiple battery cells 20 included in the battery 10 in this embodiment of this application are all polyhedral structures and may or may not have a same number of faces. To improve the space utilization of the battery 10 and facilitate processing, the multiple battery cells 20 may be designed to have a same number of faces. For example, all the battery cells 20 in the battery 10 may be designed to be hexahedrons, but the embodiments of this application are not limited thereto.

In this embodiment of this application, the first battery cell 21 and the second battery cell 22 are hexahedral structures. Considering that hexahedral structures are stable and easy to process, assemble, and arrange, multiple battery cells 20 of a hexahedral structure may be provided in the battery 10. In the following, description is provided by using an example in which both the first battery cell 21 and the second battery cell 22 are provided as hexahedral structures so as to improve the energy density and assembly efficiency of the battery 10.

Considering that the box 11 is usually a cuboid, the battery cell 20 of a hexahedral structure being provided as a regular hexahedron is conducive to arrangement, thereby improving the assembly efficiency of the battery 10. For example, as shown in FIG. 3, a cross section of the first battery cell 21 on a first plane is a parallelogram or trapezoid, where the first plane is perpendicular to the first wall 211 and the second wall 212; and a cross section of the second battery cell 22 on the first plane is a parallelogram or trapezoid. Specifically, the cross section of the first battery cell 21 on the first plane is a quadrilateral, and the quadrilateral may be a parallelogram or a trapezoid. The quadrilateral includes two intersecting sides made up by the first wall 211 and the second wall 212, and further includes a side that intersects the first wall 211 but does not intersect the second wall 212, and a side that intersects the second wall 212 but does not intersect the first wall 211. The cross section of the second battery cell 22 on the first plane is a quadrilateral, and the quadrilateral may be a parallelogram or a trapezoid. The quadrilateral includes two intersecting sides made up by the third wall 221 and the fourth wall 222, and further includes a side that intersects the third wall 221 but does not intersect the fourth wall 222, and a side that intersects the fourth wall 222 but does not intersect the third wall 221.

In some embodiments, if the cross section of the first battery cell 21 on the first plane is a parallelogram, the cross section of the second battery cell 22 on the first plane may also be a parallelogram, but the two parallelograms may have different interior angles so that the first battery cell 21 and the second battery cell 22 are differently shaped battery cells 20. Alternatively, the cross section of the second battery cell 22 on the first plane may be a trapezoid, for example, a right-angled trapezoid or an isosceles trapezoid. If the cross section of the first battery cell 21 on the first plane is a trapezoid, for example, a right-angle trapezoid or an isosceles trapezoid, the cross section of the second battery cell 22 on the first plane may be a parallelogram or a trapezoid, but the interior angles of the trapezoids of the two are different so that the first battery cell 21 and the second battery cell 22 are differently shaped battery cells 20.

In this embodiment of this application, the battery 10 includes at least two battery cell groups arranged in the first direction, where the at least two battery cell groups include the first battery cell 21 and the second battery cell 22, each of the at least two battery cell groups includes multiple battery cells arranged in a second direction, and the first direction is perpendicular to the second direction. Specifically, the battery 10 is provided with multiple battery cells 20, and to facilitate assembly, the multiple battery cells 20 are usually arranged in the box 11 of the battery 10 in a specified pattern. For example, the battery cells 20 may be arranged in an array. Specifically, in the assembled battery 10, the battery 10 includes at least two battery cell groups arranged in the first direction, and each battery cell group includes multiple battery cells 20 arranged in a second direction, the first direction and the second direction being perpendicular to each other. The at least two battery cell groups of the battery 10 include the first battery cell 21 and the second battery cell 22, and the first battery cell 21 and the second battery cell 22 may or may not be in a same battery cell group. The embodiments of this application are not limited thereto.

It should be understood that the number of battery cell groups of the battery 10 may be set depending on actual application. For example, two groups to six groups may be set, and two groups being set in FIG. 3 are used as an example, but the embodiments of this application are not limited thereto.

Optionally, the second direction in this embodiment of this application is perpendicular to the first direction, and the second direction may include a positive direction and a negative direction. For example, the positive direction of the second direction may be the direction Y as indicated by the arrow in FIG. 3. The negative direction of the second direction is opposite to the positive direction of the second direction, in other words, the negative direction of the second direction is opposite to the direction Y as indicated by the arrow in FIG. 3.

It should be understood that to improve the space utilization of the box 11 of the battery 10, thicknesses of multiple battery cells 20 in a same battery cell group in the first direction are usually set equal so that walls of the multiple battery cells 20 in the same battery cell group perpendicular to the first direction are flush with each other. Thicknesses of different battery cell groups in the first direction may be set equal or unequal so that the at least two battery cell groups may fit into boxes 11 of different thicknesses after being arranged in the first direction. For example, if the thicknesses of the different battery cell groups in the first direction are set to be the same, for example, the thickness being equal to t, the height H of the box 11 in the first direction satisfies: (H-c)=n*t, where c ∈ [10 mm, 40 mm]and further c ∈ [15 mm, 25 mm], the parameter n indicates the number of the at least two battery cell groups, and n is an integer, for example, n ∈ (1, 6] and further n ∈ [2, 3], for example, n=2.

In addition, maximum lengths of different battery cell groups in the second direction are usually set equal to fit the length of the box 11 in the second direction, so as to minimize gaps between the battery cells 20 and the box 11, thereby improving the space utilization of the box 11.

In this embodiment of this application, a separation member 25 perpendicular to the first direction is provided between the at least two battery cell groups. Specifically, in the at least two battery cell groups of the battery 10, the separation member 25 may be provided between any two adjacent battery cell groups to separate the two adjacent battery cell groups.

Specifically, the separation member 25 is at least one of the following structures: cross beam, thermal management component, and structural adhesive. For example, the separation member 25 may include a cross beam, and the cross beam can support multiple battery cells 20 to increase the strength of the box 11 so as to improve the strength and stability of the battery 10.

Optionally, the separation member 25 in this embodiment of this application may further include a thermal management component. In other words, the separation member 25 may hold fluid to regulate the temperature of the multiple battery cells 20. The fluid herein may be a liquid or a gas, and regulating the temperature means heating or cooling the multiple battery cells 20. In the case of cooling or lowering the temperature of the battery cell 20, the separation member 25 is configured to hold a cooling fluid to lower the temperature of the multiple battery cells 20. Alternatively, the separation member 25 may be configured for heating to raise the temperature of the multiple battery cells 20. This is not limited in the embodiments of this application. Optionally, the fluid may be circulated to achieve a better temperature regulation effect. Optionally, the fluid may be water, a mixture of water and ethylene glycol, air, or the like.

Optionally, the separation member 25 in this embodiment of this application may further include a structural adhesive so that multiple battery cells 20 in direct contact with the separation member 25 can be fastened to the separation member 25. Especially when largest-area walls of the multiple battery cells 20 are provided on the surface of the structural adhesive, this can greatly improve the stability of the battery cells 10, thereby improving the strength and stability of the battery 10.

Optionally, the first direction and the second direction are parallel to the first plane. As shown in FIG. 3, the cross sections of the first battery cell 21 and the second battery cell 22 on the first plane are usually parallelograms or trapezoids. Therefore, the first direction and the second direction being set parallel to the first plane lead to more regular arrangement and easy assembly of the multiple battery cells 20 and can also improve the utilization of the internal space of the box 11 of the battery 10.

It should be understood that the battery 10 in this embodiment of this application includes multiple battery cells 20 of different shapes, and that multiple battery cells 20 in a same battery cell group may have the same or different shapes. For example, in the case of the first battery cell 21 and the second battery cell 22, for any one of the battery cell groups in this embodiment of this application, the battery cell group may include multiple first battery cells 21 and/or multiple second battery cells 22 arranged in the second direction. Different embodiments are described in detail below with reference to the accompanying drawings.

Optionally, in an embodiment, for any one of the battery cell groups of the battery 10, multiple battery cells 20 included in the battery cell group have a same shape, but battery cells 20 of different battery cell groups have different shapes. Specifically, the multiple battery cell groups of the battery 10 including at least two battery cell groups satisfy that multiple battery cells 20 included in each of the at least two battery cell groups have a same shape, and that the at least two battery cell groups include differently shaped battery cells 20. Specifically, for example, in FIG. 3, the multiple battery cell groups of the battery 10 may include a first battery cell group and a second battery cell group. Battery cells 20 in the first battery cell group have a same shape, where the first battery cell group including multiple first battery cells 21 arranged in the second direction is used as an example herein; battery cells 20 in the second battery cell group also have a same shape, where the second battery cell group including multiple second battery cells 22 arranged in the second direction is used as an example herein; and the first battery cell group and the second battery cell group include battery cells 20 of different shapes.

As shown in FIG. 3, for example, the cross section of the first battery cell 21 on the first plane is an isosceles trapezoid and the cross section of the second battery cell 22 on the first plane is a parallelogram. The first battery cell group includes multiple battery cells 20 in the first row in FIG. 3, and the second battery cell group includes multiple battery cells 20 in the second row in FIG. 3. In addition, the multiple battery cells 20 included in this first battery cell group are all first battery cells 21. In other words, if in the first battery cell group, for any one of the first battery cells 21, a battery cell 23 adjacent to this first battery cell 21 is referred to as a third battery cell 23, and this third battery cell 23 has the same shape as the first battery cell 21, or the two adjacent battery cells 21 and 23 are both the first battery cells 21. Similarly, the multiple battery cells 20 included in this second battery cell group are all second battery cells 22. In other words, if in the second battery cell group, for any one of the second battery cells 22, a battery cell 24 adjacent to this second battery cell 22 is referred to as a fourth battery cell 24, and the fourth battery cell 24 has the same shape as the second battery cell 22, or the two adjacent battery cells 22 and 24 are both the second battery cells 22.

It should be understood that although battery cells 20 in a same battery cell group have a same shape but may be placed in same or different directions. For example, for the multiple first battery cells 21 included in the first battery cell group, although the cross sections of the multiple first battery cells 21 on the first plane are identical isosceles trapezoids, the multiple first battery cells 21 may be arranged in different directions when assembled. For example, in FIG. 3, when two adjacent first battery cells 21 are placed in different directions, in other words, when the isosceles trapezoid cross section of one first battery cell 21 is narrow at the top and wide at the bottom, the other battery cell 21 (for example, the third battery cell 23) adjacent to this first battery cell 21 is narrow at the bottom and wide at the top, so that the multiple first battery cells 21 can be closely arranged and the thickness of the first battery cell group in the first direction is uniform, thereby improving the space utilization of the battery 10. On the contrary, for the multiple second battery cells 22 included in the second battery cell group, because the cross sections of the multiple second battery cells 22 on the first plane are parallelograms, the multiple second battery cells 22 merely need to be arranged in a same direction to obtain a closely arranged one battery cell group.

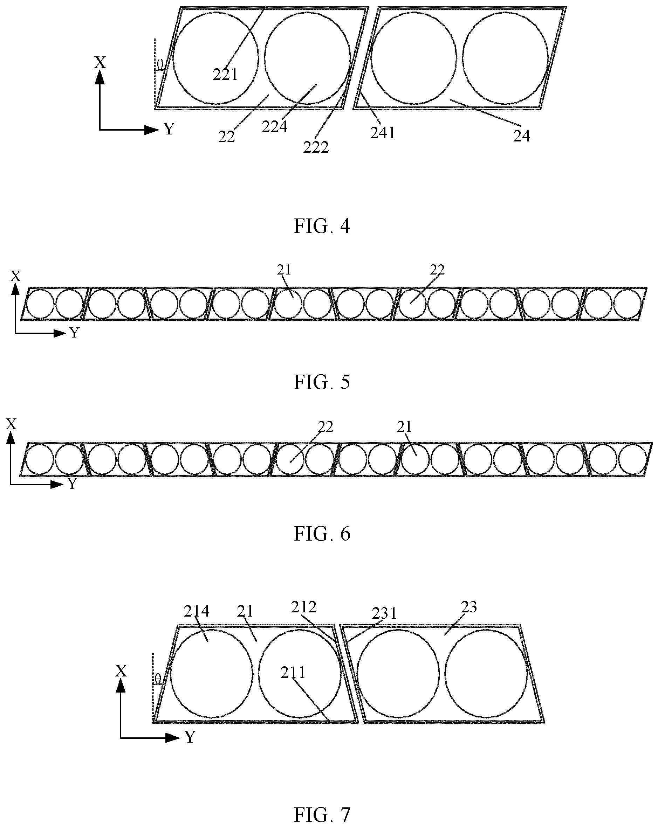

FIG. 4 is a schematic diagram of two adjacent battery cells 20 of a same shape according to an embodiment of this application. Specifically, FIG. 4 is a schematic diagram of any one of second battery cells 22 in a second battery cell group of FIG. 3 and an adjacent fourth battery cell 24. As shown in FIG. 4, if multiple battery cells 20 in a battery cell group have a same shape, the battery cell group includes two adjacent battery cells 20 of a same shape, for example, a second battery cell 22 and a fourth battery cell 24 in FIG. 4. Sections of the second battery cell 22 and the fourth battery cell 24 on the first plane are identical parallelograms, a fourth wall 222 of the second battery cell 22 is attached to a second attachment wall 241 of the fourth battery cell 24, and both the fourth wall 222 and the second attachment wall 241 are inclined with respect to the first direction at an inclined angle of θ. The fourth wall 222 is parallel to the second attachment wall 241. The inclined angle θ is a value in a range of (0°, 45°]. Further, the inclined angle θ may be a value in a range of [5°, 10°].

During use of the battery 10, interaction forces in the direction of gravity may be generated when the battery 10 is under vibration impact, that is, interaction forces in the first direction are generated. Alternatively, deformation may occur during charge and discharge, and as a result, interaction forces in the first direction are generated. The second battery cell 22 may experience part of the interaction force in the first direction through the fourth wall 222 and the second attachment wall 241 to reduce the impact of the interaction force on the second battery cell 22, for example, the deformation of the second battery cell 22, particularly, the deformation in the first direction. For example, during charge and discharge of the second battery cell 22, a second electrode assembly 224 in the second battery cell 22 may swell in the first direction, and such swelling may occur in the positive direction or the negative direction of the first direction, the fourth wall 222 and the second attachment wall 241 may constrain the swelling force to some extent. For example, the fourth wall 222 and the second attachment wall 241 may constrain the swelling force in the negative direction in the first direction to some extent to reduce the deformation of the second battery cell 22 in the first direction. In addition, the fourth battery cell 24 may also swell in the first direction during charge and discharge, and the fourth wall 222 and the second attachment wall 241 may likewise constrain to some extent the interaction force generated in the first direction by the fourth battery cell 24. For example, the fourth wall 222 and the second attachment wall 241 may constrain to some extent the swelling force generated by the fourth battery cell 24 in the positive direction of the first direction to reduce the deformation of the fourth battery cell 24.

Similarly, the first battery cell 21 may also experience part of the interaction force in the first direction through the second wall 212 and the first attachment wall 231, and the third battery cell 23 may also experience part of the interaction force in the first direction through the second wall 212 and the first attachment wall 231, to reduce the impact of the interaction force on the first battery cell 21 and the third battery cell 23, for example, the deformation of the first battery cell 21 and the third battery cell 23, particularly, the deformation in the first direction. For brevity, this is not described herein in detail.

It should be understood that as shown in FIGs. 3 and 4, because the first battery cell 21 and the second battery cell 22 have walls inclined with respect to the first direction, there is a gap 26 between each battery cell group and the box 11, wasting the space of the box 11. To improve the space utilization, other parts, reinforcement bars, and other structures may be provided at the gaps 26 to improve the strength of the box 11, or battery cells 20 of a corresponding shape may be provided at the gaps 26 to fill the internal space of the box 11. For example, battery cells 20 whose cross section on the first plane is a right-angle trapezoid is provided at the gap 26 shown in FIG. 3 to fill the gap 26 and increase the energy density of the battery 10. In this way, battery cells 20 of different shapes may exist within a same battery cell group.

Optionally, in another embodiment, for any one of the battery cell groups of the battery 10, the battery cell group may include multiple battery cells 20 of different shapes. Specifically, the multiple battery cell groups of the battery 10 include at least one third battery cell group, and the third battery cell group satisfies that the third battery cell group includes battery cells 20 of different shapes to improve the flexibility of assembling the multiple battery cells 20, and improve the energy density of the battery 10 as much as possible by making the battery cell 20 of different shapes adapt to the internal space of the box 11. FIG. 5 is a schematic diagram of a third battery cell group according to an embodiment of this application, and FIG. 6 is a schematic diagram of another third battery cell group according to an embodiment of this application. As shown in FIGs. 5 and 6, the third battery cell group includes at least one first battery cell 21 and at least one second battery cell 22.

Optionally, any two adjacent battery cells 20 in the third battery cell group may have the same or different shapes. For example, as shown in FIGs. 5 and 6, any two adjacent battery cells 20 included in the third battery cell group may include two first battery cells 21, or two second battery cells 22, or one first battery cell 21 and one second battery cell 22. The embodiments of this application are not limited thereto. In addition, when having a same shape, two adjacent battery cells 20 may be placed in the same or different directions. For example, for two adjacent first battery cells 21 in the third battery cell group, although cross sections of the two first battery cells 21 on the first plane are identical isosceles trapezoids, during assembly, when the isosceles trapezoid cross section of one first battery cell 21 is narrow at the top and wide at the bottom, the isosceles trapezoid cross section of the other battery cell 21 (for example, the third battery cell 23) adjacent to this first battery cell 21 is narrow at the bottom and wide at the top, so that the two adjacent first battery cells 21 can be closely arranged and the thickness of the two first battery cells 21 in the first direction is uniform, thereby improving the space utilization of the battery 10. On the contrary, for two adjacent second battery cells 22 in the third battery cell group, because the cross sections of the two second battery cells 22 on the first plane are parallelograms, the two second battery cells 22 merely need to be arranged in a same direction to obtain two closely arranged second battery cells 22.

FIG. 7 is a schematic diagram of two adjacent battery cells 20 in a third battery cell group according to an embodiment of this application, and in FIG. 7, the two adjacent battery cells 20 having different shapes is used as an example. A battery cell 20 on the left in FIG. 7 is the first battery cell 21, and a cross section of the first battery cell 21 on the first plane is an isosceles trapezoid. A third battery cell 23 adjacent to the first battery cell 21 has a different shape from the first battery cell 21, and the third battery cell 23 has a same shape as the second battery cell 22, or the third battery cell 23 is the second battery cell 22. A cross section of the third battery cell 23 on the first plane is a parallelogram.

As shown in FIG. 7, a second wall 212 of the first battery cell 21 is attached to a first attachment wall 231 of the third battery cell 23. Both the second wall 212 and the first attachment wall 231 are inclined with respect to the first direction at an inclined angle θ. The second wall 212 is parallel to the first attachment wall 231. The inclined angle θ is a value in a range of (0°, 45°]. Further, the inclined angle θ may be a value in a range of [5°, 10°].

During use of the battery 10, interaction forces in the direction of gravity may be generated when the battery 10 is under vibration impact, that is, interaction forces in the first direction are generated. Alternatively, deformation may occur during charge and discharge, and as a result, interaction forces in the first direction are generated. The first battery cell 21 may experience part of the interaction force in the first direction through the first wall 212 and the first attachment wall 231 to reduce the impact of the interaction force on the first battery cell 21, for example, the deformation of the first battery cell 21, particularly, the deformation in the first direction. For example, during charge and discharge of the first battery cell 21, a first electrode assembly 214 in the first battery cell 21 may swell in the first direction, and such swelling may occur in the positive direction or the negative direction of the first direction, the second wall 212 and the first attachment wall 231 may constrain the swelling force to some extent. For example, the second wall 212 and the first attachment wall 231 may constrain the swelling force in the positive direction in the first direction to some extent to reduce the deformation of the first battery cell 21 in the first direction. In addition, the third battery cell 23 may also swell in the first direction during charge and discharge, and the second wall 212 and the first attachment wall 231 may likewise constrain to some extent the interaction forces generated in the first direction by the third battery cell 23. For example, the second wall 212 and the first attachment wall 231 may constrain to some extent the swelling force generated by the third battery cell 23 in the negative direction of the first direction, to reduce the deformation of the third battery cell 23.

Similarly, the second battery cell 22 may also experience part of the interaction force in the first direction through the fourth wall 222 and the second attachment wall 241, and the fourth battery cell 24 may also experience part of the interaction force in the first direction through the fourth wall 222 and the second attachment wall 241, to reduce the impact of the interaction force on the second battery cell 22 and the fourth battery cell 24, for example, the deformation of the second battery cell 22 and the fourth battery cell 24, particularly, the deformation in the first direction. For brevity, this is not described herein in detail.

It should be understood that the foregoing two embodiments may be used separately or in combination. For example, the at least two battery cell groups of the battery 10 may include at least one first battery cell group and at least one second battery cell group; the at least two battery cell groups may include only multiple third battery cell groups; the at least two battery cell groups include at least one first battery cell group, at least one second battery cell group, and at least one third battery cell group; the at least two battery cell groups include at least one first battery cell group and at least one third battery cell group; or the at least two battery cell groups include at least one second battery cell group and at least one third battery cell group. The embodiments of this application are not limited thereto.

In this embodiment of this application, each battery cell group includes multiple battery cells in direct contact with side walls of the box 11. The second wall 212 of the first battery cell 21 and the fourth wall 222 of the second battery cell 22 are inclined with respect to the first direction and thus can experience at least part of the interaction force in the first direction between the battery cells 20. Therefore, end plates perpendicular to the side walls of the box 11 may not be provided at two ends of the multiple battery cells 20 so that outermost battery cells 20 of each battery cell group may be in direct contact with the side walls of the box 11. For example, as shown in FIGs. 3 to 7, for the side walls of the box 11 perpendicular to the second direction, the side wall may be in direct contact with battery cells 20 without the need for end plates, thereby saving the internal space of the box 11 and increasing the energy density of the battery 10.

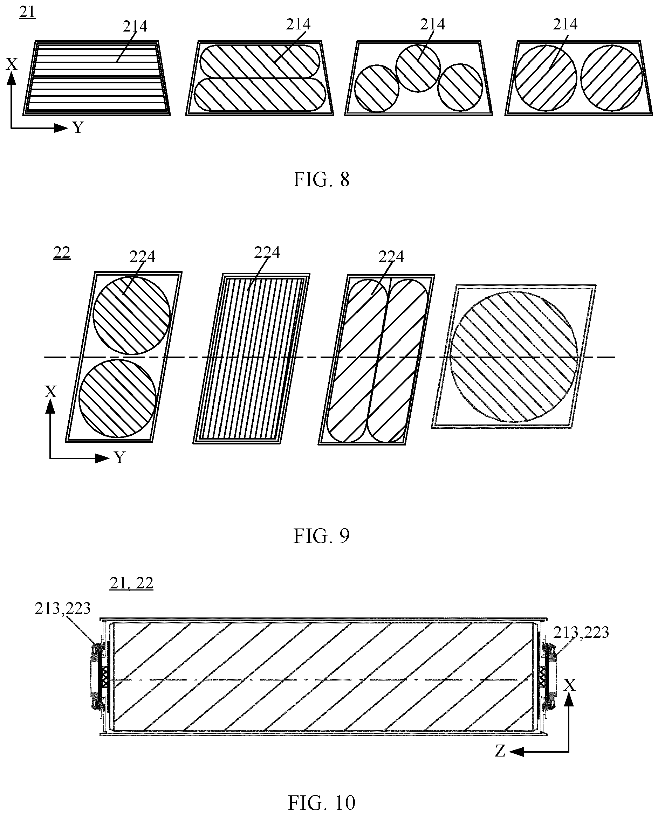

It should be understood that the battery cell 20 in this embodiment of this application includes an electrode assembly, and electrode assemblies of different types, sizes, and shapes may be flexibly provided based on the shape of the battery cell 20. For example, the first battery cell 21 is used as an example. FIG. 8 is a schematic diagram of various possible cross sections of a first battery cell 21 according to an embodiment of this application. As shown in FIG. 8, the first battery cell 21 has a cross section of an isosceles trapezoid on the first plane, and has a first electrode assembly 214 inside. The number of first electrode assemblies 214 in the first battery cell 21 may also be set depending on actual application. For example, one or more first electrode assemblies 214 may be provided, and for another example, one to four first electrode assemblies 214 may be provided. Moreover, when the first battery cell 21 includes multiple first electrode assemblies 214 inside, the multiple first electrode assemblies 214 may be arranged depending on actual application. For example, when the first battery cell 21 includes two first electrode assemblies 214, the two first electrode assemblies 214 may be arranged in the first direction or the second direction. For another example, when the first battery cell 21 includes more than two first electrode assemblies 214, another arrangement manner may be used to improve the energy density of the first battery cell 21. The embodiments of this application are not limited thereto.

As shown in FIG. 8, for each first electrode assembly 214, the first electrode assembly 214 may be laminated, such as the first diagram on the left in FIG. 8. The laminated first electrode assembly is provided in a stacking manner in the first direction. Alternatively, the first electrode assembly 214 may be wound, such as the three diagrams on the right in FIG. 8, and a winding axis of the first electrode assembly 214 is perpendicular to the first plane, or a winding axis of the first electrode assembly 214 is perpendicular to the first direction and the second direction. In addition, a cross section of the first electrode assembly 214 on the first plane may be of any shape, for example, a trapezoid, circle, or oval. In addition, the cross section of the first battery cell 21 on the first plane is an isosceles trapezoid, in other words, the lengths of this first battery cell 21 in the second direction are different at different positions of the first battery cell 21 in the first direction. Therefore, multiple first electrode assemblies 214 of different sizes may be provided in the first battery cell 21 to adapt to the shape of the first battery cell 21.

It should be understood that similar to the first battery cell 21, the second electrode assembly 224 in the second battery cell 22 may also be provided flexibly in number, shape, size, and type depending on practical application, and the foregoing description of the first electrode assembly 214 of the first battery cell 21 applies. For brevity, details are not repeated herein again. In addition, the first electrode assembly 214 of the first battery cell 21 and the second electrode assembly 224 of the second battery cell 22 may be provided in the same or different ways. The embodiments of this application are not limited thereto.

In this embodiment of this application, the wall with a largest area of the first battery cell 21 is perpendicular to the first direction, and the wall with a largest area of the second battery cell 22 is perpendicular to the first direction. Specifically, when the electrode assembly in the battery cell 20 is provided in the several ways shown in FIG. 8, the deformation of the two separate walls of the battery cell 20 perpendicular to the first direction is large. Therefore, as shown in FIGs. 3 to 8, the largest-area walls of the first battery cell 21 and the second battery cell 22 being set perpendicular to the first direction are more conducive to heat dissipation, thereby reducing the swelling force of the first battery cell 21 and the second battery cell 22 in the first direction and improving the stability and safety of the battery 10.

In addition, as shown in FIGs. 3 to 7, when the first electrode assembly 214 in the first battery cell 21 and the second electrode assembly 224 in the second battery cell 22 are provided in the manners shown in the figures, it can also be ensured that electrolyte in each battery cell 20 has high uniform infiltration to electrode assemblies, ensuring environment uniformity of multiple electrode assemblies in a same battery cell 20, thereby improving the performance of the battery cell 20. Moreover, such electrode assembly arrangement manner can further lead to a small contact area between the electrode assembly and the external housing of the battery cell 20, and thus a small heat conduction area of the electrode assembly, so that heat diffusion of the battery cell 20 can be well resolved.

Optionally, the wall with a largest area of the first battery cell 21 is inclined with respect to the first direction, and the wall with a largest area of the second battery cell 22 is inclined with respect to the first direction. Specifically, FIG. 9 is a schematic diagram of various possible cross sections of a second battery cell 22 according to an embodiment of this application. As shown in FIG. 9, the second battery cell 20 is used as an example herein. Unlike FIGs. 3 to 8, the largest-area walls of the first battery cell 21 and the second battery cell 22 may alternatively be inclined with respect to the first direction to be attached to the adjacent battery cell 20.

For example, as shown in the first diagram on the left of FIG. 9, the second battery cell 22 may include two wound second electrode assemblies 224 arranged in the first direction, and a cross section of each second electrode assembly 224 on the first plane is a circle. A winding axis of each second electrode assembly 224 is perpendicular to the first plane, or a winding axis of each second electrode assembly 224 is perpendicular to the first direction and the second direction. For another example, as shown in the second diagram on the left of FIG. 9, the second electrode assembly 224 of the second battery cell 22 may alternatively be laminated, with the stacking direction perpendicular to the wall with the largest area. For another example, as shown in the third diagram on the left of FIG. 9, the second battery cell 22 may further include two wound second electrode assemblies 224 arranged in the second direction, and a cross section of each second electrode assembly 224 on the first plane is an approximate oval. A winding axis of each second electrode assembly 224 is perpendicular to the first plane, or a winding axis of each second electrode assembly 224 is perpendicular to the first direction and the second direction. For another example, as shown in the fourth diagram on the left of FIG. 9, if a cross section of the second battery cell 22 on the first plane is an equilateral parallelogram, four walls represented by four sides of the equilateral parallelogram have equal areas and are all the largest-area walls of the second battery cell 22. A cylindrical second electrode assembly 224 may be further provided in the second battery cell 22. The second electrode assembly 224 is wound, with a winding axis perpendicular to the first plane or a winding axis of the second electrode assembly 224 perpendicular to the first direction and the second direction, but the embodiments of this application are not limited thereto.

Similarly, similar to the second battery cell 22 in FIG. 9, the first electrode assembly 214 in the first battery cell 21 may also be provided flexibly in number, shape, size, and type depending on practical application, and the foregoing description of the second electrode assembly 224 of the second battery cell 22 in FIG. 9 applies. For brevity, details are not repeated herein again. In addition, the first electrode assembly 214 of the first battery cell 21 and the second electrode assembly 224 of the second battery cell 22 may be provided in the same or different ways. The embodiments of this application are not limited thereto.

It should be understood that as shown in FIGs. 3 to 9, for the foregoing battery cell 20 with a cylindrical wound electrode assembly, a swelling space may not be reserved on an outer surface of the battery cell 20, and outer surfaces of two adjacent battery cells 20 may be directly bound together via a coating or the like so as to improve the overall stiffness and strength of the battery 10. Specifically, for the cylindrical wound electrode assembly, interlayer gaps between electrode plates and the pole piece may be used so that the electrode assembly forms a cylinder to constrain swelling itself after swelling. This leads to a small change in an external diameter of the cylindrical electrode assembly after swelling, so that the swelling deformation caused by the electrode assembly to the external housing of the battery cell 20 is also small. Especially, the swelling deformation of the surface with a largest area of the battery cell 20 is small, and therefore there is no need to reserve swelling space for the battery cell 20, improving the space utilization of the battery cell 20 in the battery 10, thus improving the energy density of the battery 10.

Optionally, the interlayer gaps between electrode plates of the cylindrical wound electrode assembly may be set in various manners. For example, bumps may be provided on at least part of the surface of the electrode plates so that after the electrode plates are wound, the interlayer gaps are formed because of the bumps on the surface of the electrode plates; or a coating may be added between the electrode plates so as to construct the interlayer gaps. For example, the coating may be polycarbosilane (Polycarbosilane, PCS), but the embodiments of this application are not limited thereto.

In this embodiment of this application, the wall with a smallest area of the first battery cell 21 is parallel to the first plane, and the wall with a smallest area of the second battery cell 22 is parallel to the first plane. As shown in FIGs. 3 to 9, for the box 11 of a cuboid, the wall with a smallest area of the battery cell 20 in the box 11 being set parallel to the first plane helps to save space and avoid excessive gaps between the battery cell 20 and the box 11 in the direction perpendicular to the first plane.

Optionally, a first electrode terminal 213 is provided on a wall with a smallest area of the first battery cell 21, and a second electrode terminal 223 is provided on a wall with a smallest area of the second battery cell 22. Because electrode terminals are usually not large, space can be reduced by providing an electrode terminal on the wall with a smallest area of the battery cell 20, for example, providing the first electrode terminal 213 on the wall with a smallest area of the first battery cell 21 and providing the second electrode terminal 223 on the wall with a smallest area of the second battery cell 22. In addition, as shown in FIGs. 3 to 9, regardless of the manner of arranging and assembling the battery cells 20, the electrode terminals being provided on the smallest-area walls do not affect the attachment between two adjacent battery cells 20.

Optionally, the first battery cell 21 is provided with two first electrode terminals 213 located on different walls, and the second battery cell 22 is provided with two second electrode terminals 223 located on different walls. The battery cell 20 has two electrode terminals: a positive electrode terminal and a negative electrode terminal. The two electrode terminals may be located on the same or different walls. In addition, when the two electrode terminals are located on different walls, the two walls on which the two electrode terminals are located may or may not intersect. For example, the two electrode terminals may be located on two walls parallel to each other. The embodiments of this application are not limited thereto.

FIG. 10 is a schematic diagram of a battery cell 20 according to an embodiment of this application. As shown in FIG. 10, the battery cell 20 may be the first battery cell 21, and the first battery cell 21 has two first electrode terminals 213 provided on different walls. Herein, the two first electrode terminals 213 being located on walls with smallest but equal areas are used as an example, and the two walls on which the two first electrode terminals 213 are provided are opposite to each other. Alternatively, the battery cell 20 in FIG. 10 may be the second battery cell 22, and the second battery cell 22 has second electrode terminals 223 provided on different walls. Herein, the two second electrode terminals 223 being located on walls with smallest but equal areas are used as an example, and the two walls on which the two second electrode terminals 223 are provided are opposite to each other.

As shown in FIG. 10, the wall on which the first electrode terminal 213 or the second electrode terminal 223 is located is perpendicular to a third direction. The third direction is perpendicular to the first direction and the second direction. The third direction may alternatively be perpendicular to the first plane. The third direction may include a positive direction and a negative direction. The positive direction of the third direction may be the direction Z as indicated by the arrow in FIG. 10. The negative direction of the third direction is opposite to the positive direction of the third direction, in other words, the negative direction of the third direction is opposite to the direction Z as indicated by the arrow in FIG. 10.

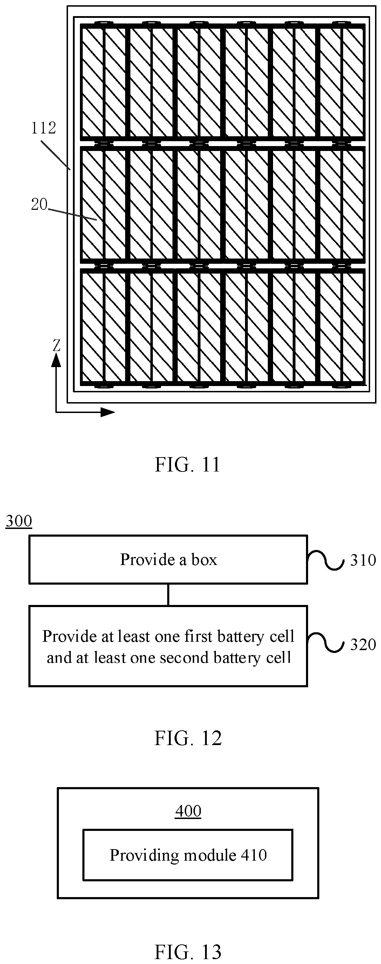

FIG. 11 is a schematic diagram of a cross section of a battery 10 according to an embodiment of this application. The cross section is a cross section of a plane perpendicular to the second direction. As shown in FIG. 11, the electrode terminals of the battery cell 20 are arranged at two ends of the battery cell 20 as shown in FIG. 10 and then assembled into the battery 10. In this way, the battery cells 20 in the third direction no longer need a busbar to implement electrical connection, and electrode terminals of two adjacent battery cells 20 in the third direction only need to abut against each other to implement electrical connection of the two adjacent battery cells 20 so as to implement rapid assembly of the battery 10.In this way, busbars are spared reservation of installation spaces for busbars is not required, thereby improving the assembly efficiency of the battery 10 and also increasing the energy density of the battery 10.

The battery cell, the battery, and the electric device in the embodiments of this application are described above, and a method and device for manufacturing battery in the embodiments of this application are described below. For content that is not described in detail, refer to the foregoing embodiments.

FIG. 12 is a schematic flowchart of a method 300 for manufacturing battery 10 according to an embodiment of this application. As shown in FIG. 12, the method 300 may include: S310: providing a box 11, and S320: providing at least one first battery cell 21 and at least one second battery cell 22, where the first battery cell 21 and the second battery cell 22 are accommodated in the box 11, and the first battery cell 21 and the second battery cell 22 are polyhedral structures of different shapes; where the first battery cell 21 includes a first wall 211 and a second wall 212 that are interconnected, the first wall 211 is perpendicular to a first direction, the first direction is perpendicular to an upper cover or a bottom wall of the box 11, the second wall 212 is inclined with respect to the first direction, and the second wall 212 is configured to be attached to a first attachment wall 231 adjacent to the first battery cell 21 so that interaction forces in the first direction are generated between the second wall 212 and the first attachment wall 231; and the second battery cell 22 includes a third wall 221 and a fourth wall 222 that are interconnected, the third wall 221 is perpendicular to the first direction, the fourth wall 222 is inclined with respect to the first direction, and the fourth wall 222 is configured to attach to a second attachment wall 241 adjacent to the second battery cell 22 so that interaction forces in the first direction are generated between the fourth wall 222 and the second attachment wall 241.

FIG. 13 is a schematic block diagram of a device 400 for manufacturing battery 10 according to an embodiment of this application. As shown in FIG. 13, the device 400 may include a providing module 410. The providing module 410 is configured to provide a box 11, and provide at least one first battery cell 21 and at least one second battery cell 22, where the first battery cell 21 and the second battery cell 22 are accommodated in the box 11, and the first battery cell 21 and the second battery cell 22 are polyhedral structures of different shapes; where the first battery cell 21 includes a first wall 211 and a second wall 212 that are interconnected, the first wall 211 is perpendicular to a first direction, the first direction is perpendicular to an upper cover or a bottom wall of the box 11, the second wall 212 is inclined with respect to the first direction, and the second wall 212 is configured to be attached to a first attachment wall 231 adjacent to the first battery cell 21 so that interaction forces in the first direction are generated between the second wall 212 and the first attachment wall 231; and the second battery cell 22 includes a third wall 221 and a fourth wall 222 that are interconnected, the third wall 221 is perpendicular to the first direction, the fourth wall 222 is inclined with respect to the first direction, and the fourth wall 222 is configured to attach to a second attachment wall 241 adjacent to the second battery cell 22 so that interaction forces in the first direction are generated between the fourth wall 222 and the second attachment wall 241.

Although this application has been described with reference to the preferred embodiments, various modifications to this application and replacements with equivalents of the components herein can be made without departing from the scope of this application. In particular, as long as there is no structural conflict, the various technical features mentioned in the embodiments can be combined in any manners. This application is not limited to the specific embodiments disclosed in this specification but includes all technical solutions falling within the scope of the claims.

## Claims

1. A battery, **characterized by** comprising:
a box (11); and
at least one first battery cell (21) and at least one second battery cell (22) that are accommodated in the box (11), the first battery cell (21) and the second battery cell (22) being polyhedral structures of different shapes;
wherein the first battery cell (21) comprises a first wall (211) and a second wall (212) that are interconnected, the first wall (211) is perpendicular to a first direction, the first direction is perpendicular to an upper cover or a bottom wall of the box (11), the second wall (212) is inclined with respect to the first direction, and the second wall (212) is configured to be attached to a first attachment wall (231) adjacent to the first battery cell (21) so that interaction forces in the first direction are generated between the second wall (212) and the first attachment wall (231); and the second battery cell (22) comprises a third wall (221) and a fourth wall (222) that are interconnected, the third wall (221) is perpendicular to the first direction, the fourth wall (222) is inclined with respect to the first direction, and the fourth wall (222) is configured to attach to a second attachment wall (241) adjacent to the second battery cell (22) so that interaction forces in the first direction are generated between the fourth wall (222) and the second attachment wall (241).

2. The battery according to claim 1, **characterized in that** the first battery cell (21) and the second battery cell (22) are hexahedral structures.

3. The battery according to claim 2, **characterized in that** a cross section of the first battery cell (21) on a first plane is a parallelogram or trapezoid, wherein the first plane is perpendicular to the first wall (211) and the second wall (212); and
a cross section of the second battery cell (22) on the first plane is a parallelogram or trapezoid.

4. The battery according to claim 3, **characterized in that** the battery comprises at least two battery cell groups arranged in the first direction, wherein the at least two battery cell groups comprise the first battery cell (21) and the second battery cell (22), each of the at least two battery cell groups comprises multiple battery cells arranged in a second direction, and the first direction is perpendicular to the second direction.

5. The battery according to claim 4, **characterized in that** the first direction and the second direction are parallel to the first plane.

6. The battery according to claim 4 or 5, **characterized in that** the battery cell group comprises multiple first battery cells (21) and/or multiple second battery cells (22) arranged in the second direction.

7. The battery according to any one of claims 4 to 6, **characterized in that** a separation member (25) perpendicular to the first direction is provided between the at least two battery cell groups.

8. The battery according to claim 7, **characterized in that** the separation member (25) is at least one of the following structures: cross beam, thermal management component, and structural adhesive.

9. The battery according to any one of claims 4 to 8, **characterized in that** a wall with a largest area of the first battery cell (21) is perpendicular to the first direction, and a wall with a largest area of the second battery cell (22) is perpendicular to the first direction.

10. The battery according to any one of claims 4 to 9, **characterized in that** each of the battery cell groups comprises multiple battery cells that are in direct contact with side walls of the box (11).

11. The battery according to any one of claims 3 to 10, **characterized in that** a wall with a smallest area of the first battery cell (21) is parallel to the first plane, and a wall with a smallest area of the second battery cell (22) is parallel to the first plane.

12. The battery according to any one of claims 1 to 11, **characterized in that** a first electrode terminal (213) is provided on a wall with a smallest area of the first battery cell (21), and a second electrode terminal (223) is provided on a wall with a smallest area of the second battery cell (22).

13. The battery according to any one of claims 1 to 12, **characterized in that** the first battery cell (21) is provided with two first electrode terminals (213) located on different walls, and the second battery cell (22) is provided with two second electrode terminals (223) located on different walls.

14. The battery according to any one of claims 1 to 13, **characterized in that** the second wall (212) is inclined at an angle in a range of (0°, 45°] with respect to the first direction, and the fourth wall (222) is inclined at an angle in a range of (0°, 45°] with respect to the first direction.

15. An electric device comprising the battery according to any one of claims 1 to 14, wherein the battery is configured to provide electric energy for the electric device.

16. A method for manufacturing a battery, comprising:
providing a box (11); and
providing at least one first battery cell (21) and at least one second battery cell (22), wherein the first battery cell (21) and the second battery cell (22) are accommodated in the box (11), and the first battery cell (21) and the second battery cell (22) are polyhedral structures of different shapes;
wherein the first battery cell (21) comprises a first wall (211) and a second wall (212) that are interconnected, the first wall (211) is perpendicular to a first direction, the first direction is perpendicular to an upper cover or a bottom wall of the box (11), the second wall (212) is inclined with respect to the first direction, and the second wall (212) is configured to be attached to a first attachment wall (231) adjacent to the first battery cell (21) so that interaction forces in the first direction are generated between the second wall (212) and the first attachment wall (231); and the second battery cell (22) comprises a third wall (221) and a fourth wall (222) that are interconnected, the third wall (221) is perpendicular to the first direction, the fourth wall (222) is inclined with respect to the first direction, and the fourth wall (222) is configured to attach to a second attachment wall (241) adjacent to the second battery cell (22) so that interaction forces in the first direction are generated between the fourth wall (222) and the second attachment wall (241).

17. A device for manufacturing battery cell, comprising a providing module (410) configured to:
provide a box (11); and
provide at least one first battery cell (21) and at least one second battery cell (22), wherein the first battery cell (21) and the second battery cell (22) are accommodated in the box (11), and the first battery cell (21) and the second battery cell (22) are polyhedral structures of different shapes;
wherein the first battery cell (21) comprises a first wall (211) and a second wall (212) that are interconnected, the first wall (211) is perpendicular to a first direction, the first direction is perpendicular to an upper cover or a bottom wall of the box (11), the second wall (212) is inclined with respect to the first direction, and the second wall (212) is configured to be attached to a first attachment wall (231) adjacent to the first battery cell (21) so that interaction forces in the first direction are generated between the second wall (212) and the first attachment wall (231); and the second battery cell (22) comprises a third wall (221) and a fourth wall (222) that are interconnected, the third wall (221) is perpendicular to the first direction, the fourth wall (222) is inclined with respect to the first direction, and the fourth wall (222) is configured to attach to a second attachment wall (241) adjacent to the second battery cell (22) so that interaction forces in the first direction are generated between the fourth wall (222) and the second attachment wall (241).
